# EUROPEAN PATENT APPLICATION

(11) **EP 4 815 394 A1**
(43) Date of publication of application: **30.09.2026**
(21) Application number: 25166235.9
(22) Date of filing: 26.03.2025
(51) Int. Cl.: H04L 43/0811, H04L 43/0817, H04L 67/12, H04W 4/70, H04L 41/00

(54) **ENHANCING ACCURACY OF DEVICE IDENTIFICATION OF IOT DEVICE**

(71) Applicant: Cujo LLC, Covina, CA 91723 (US)
(72) Inventor: Janoné, Ausra, 45257 Kaunas (LT)
(74) Representative: Marks & Clerk LLP

(57) **Abstract**

A device identification of an Internet of Things, IoT, device accessing the Internet via a customer-premises equipment of a household is performed (104). Operation data of a personal computing device of the household accessing the Internet via the customer-premises equipment of the household is obtained (122). An accuracy of the device identification of the IoT device is enhanced (134) based on the operation data of the personal computing device of the household.

## Description

### FIELD

The invention relates to a method, apparatus, computer program product, and computer-readable medium.

### BACKGROUND

Device identification of an Internet of Things (IoT) device refers to a capability to detect and identify an IoT device in a home or office wireless local area network (WLAN) provided by a customer-premises equipment (CPE). The device identification of the IoT device is difficult, because there are numerous different manufacturers, models, and application areas. Furthermore, as IoT devices typically transmit only small amounts of data, the device identification is made more difficult, and may also lead to an incorrect identification, i.e., a false positive identification error, wherein the IoT device is incorrectly identified as a specific make and model. As different makes and models of the IoT devices have different vulnerabilities, false positive identification errors cause a compromised cybersecurity protection. Further sophistication in the device identification of the IoT devices is desirable.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A and FIG. 1B are flowcharts illustrating examples of a method;
FIG. 2 is a block diagram illustrating an example implementation environment for the method;
FIG. 3A and FIG. 3B are block diagrams illustrating examples of a cybersecurity apparatus;
FIG. 4 is a block diagram illustrating an example of a personal computing device or an IoT device;
FIG. 5 is a block diagram illustrating an example of a computing resource; and
FIG. 6A and FIG. 6B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

An accuracy of the device identification of the IoT device of a specific household may be enhanced with operation data of a personal computing device of that specific household. In other words, instead of relying on data transmitted by the IoT device itself, the device identification is supplemented by operation data of the personal computing device. The operation data may indicate that a certain IoT mobile application is executing on the personal computing device of the household. As IoT mobile applications are typically paired with compatible IoT devices, the operation data may be used to enhance the accuracy of the device identification of the IoT device. The IoT device identification may thus even be enabled or its accuracy enhanced, and the false positive identification errors may be avoided.

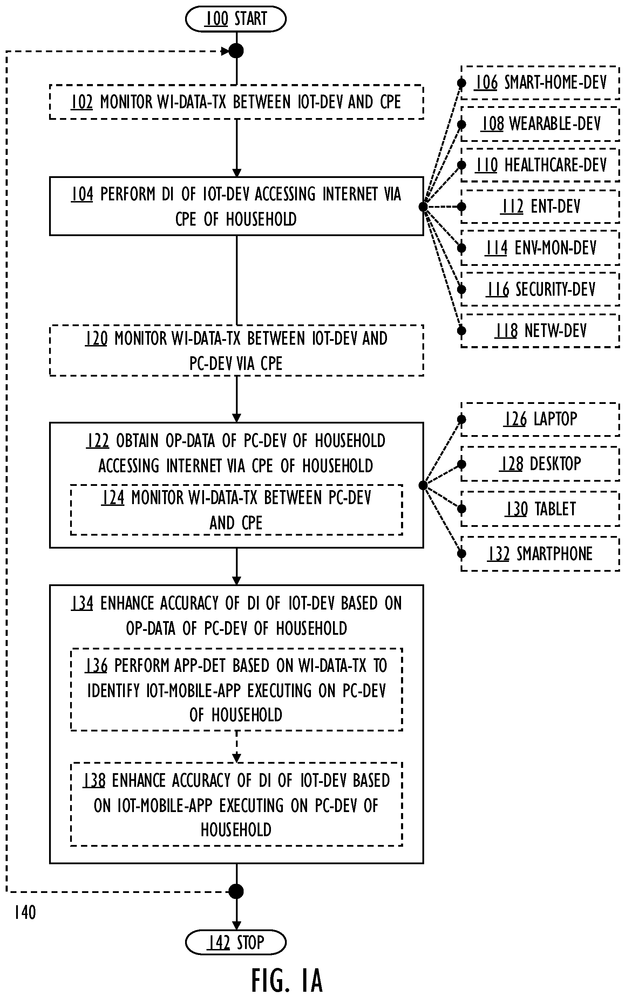

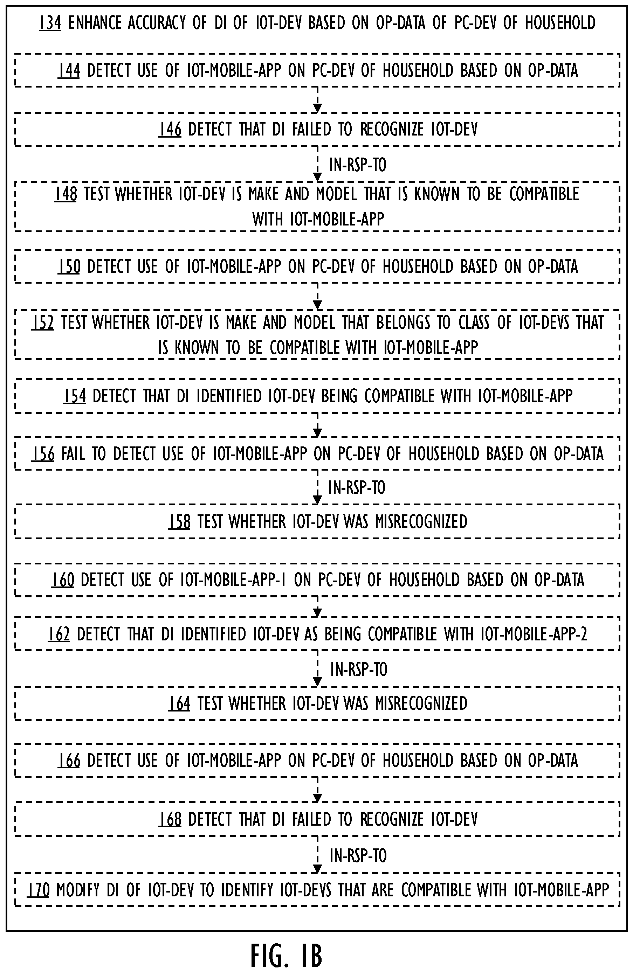

FIG. 1A and FIG. 1B are flowcharts illustrating examples of a computer-implemented method. The method performs operations related to enhancing an accuracy of a device identification of an IoT device of a household. The method starts in 100 and ends in 142. The method may run in principle endlessly. The infinite running may be achieved by looping 140 back as shown in FIG. 1A.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

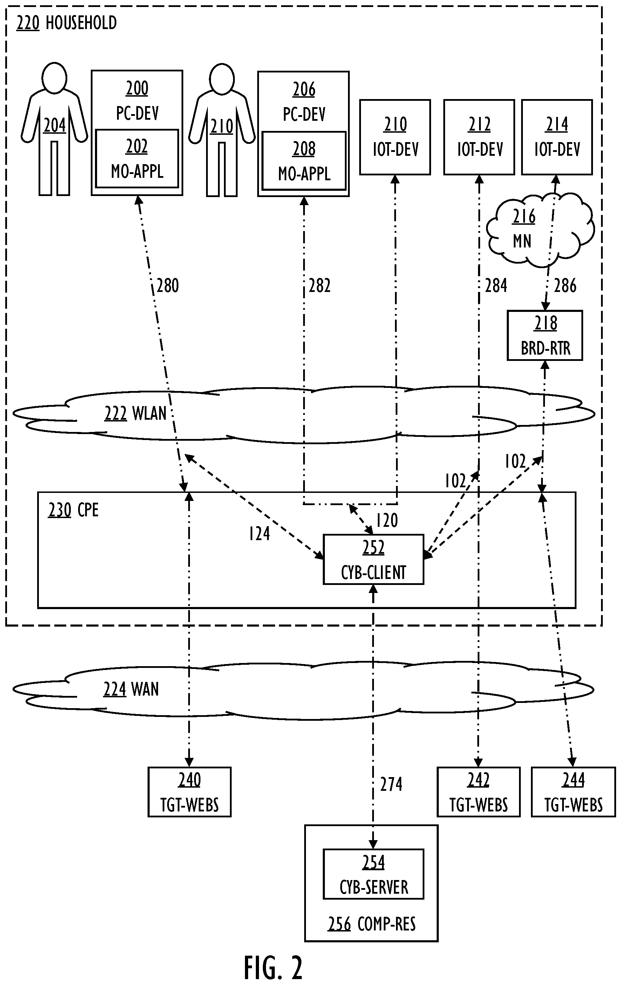

FIG. 2 is a block diagram illustrating an example implementation environment for the computer-implemented method. The method may operate within a customer-premises equipment 230, but optionally also partly within a computing resource 256.

A device identification of an IoT device 210, 212, 214 accessing the Internet 224 via the customer-premises equipment 230 of a household 220 is performed 104.

The customer-premises equipment 230 is installed at a home or office of the household 220 to convert internet connections into a wireless local area network 222. The customer-premises equipment 230 manages the communication between the Internet 224 and the IoT devices 210, 212, 214. The device identification of the IoT devices 210, 212, 214 within the wireless local area network 222 involves analyzing network traffic and device characteristics. The techniques include network traffic analysis, frame characteristics analysis, and the application of enhanced algorithms. The customer-premises equipment 230 monitors network traffic, applies identification algorithms, and ensures privacy and security. By examining data packets transmitted over the wireless local area network 222, specific patterns and features may be identified, including attributes like a packet size, protocols used, Internet protocol (IP) addresses, and port numbers. In a Wi-Fi environment defined by the Institute of Electrical and Electronics Engineers (IEEE) 802.11 standard, protocol data frames may reveal distinctive traits of various IoT devices, such as a frame length, an arrival time, a duration, and a sequence number. Advanced algorithms like a classification and regression tree (CART) may be used to analyze these traffic characteristics and accurately identify IoT devices 210, 212, 214.

Artificial intelligence (AI) may enhance the accuracy and efficiency of recognizing and managing IoT devices 210, 212, 214 within the wireless local area network 222. Machine learning algorithms, deep learning techniques, and behavior-based identification may be employed for this purpose. Supervised learning algorithms, such as decision trees, support vector machines (SVM), and k-nearest neighbors (KNN), may be trained on labeled datasets to classify the IoT devices 210, 212, 214 based on their network behavior. Unsupervised learning algorithms, such as k-means clustering, may group devices with similar behavior patterns, which is useful for identifying unknown or new IoT devices. Deep learning techniques, including convolutional neural networks (CNN) and recurrent neural networks (RNN), analyze network traffic and time-series data to identify patterns specific to different IoT devices 210, 212, 214. AI models integrated into the customer-premises equipment 230 enable real-time monitoring and edge computing, reducing latency and allowing for faster identification and response.

AI processing may be effectively divided between the customer-premises equipment (CPE) and the networked computing resource (also known as a cloud computing) 256 to optimize performance, reduce latency, and enhance data security. This division leverages the strengths of both local edge computing and centralized cloud computing.

The customer-premises equipment 230 may collect and analyze data locally. This allows for immediate processing and decision-making based on real-time data, which is crucial for applications requiring low latency. AI models, once trained in the cloud 256, may be deployed on the customer-premises equipment 230 to perform inference tasks. This means that predictions and decisions may be made locally in the customer-premises equipment 230 without the need to send data back to the cloud 256. Processing data at the edge ensures that the context of the data (such as location and time) is preserved, which is essential for accurate and meaningful AI analysis. Local processing reduces the amount of sensitive data transmitted over the Internet 224, enhancing privacy and security.

The cloud 256 provides the computational power necessary for training complex AI models on large datasets. This includes using specialized hardware like neural processing units (NPU), tensor processing units (TPU) and graphics processing units (GPU) to accelerate training. The cloud 256 may aggregate data from multiple sources, providing a comprehensive dataset for training and analysis. The cloud 256 also offers scalable storage solutions for large volumes of data. The cloud 256 may perform more sophisticated and resource-intensive analytics that may not be feasible on the customer-premises equipment 230. This includes deep learning and other complex AI algorithms. The cloud 256 may continuously update and enhance AI models based on new data and insights. These updated models may then be deployed back to the customer-premises equipment 230 for local inference.

Data may initially be collected and pre-processed by a large number of customer-premises equipment 230. Relevant data is then securely transmitted to the cloud 256 for further processing and model training. Trained models are deployed from the cloud 256 back to the customer-premises equipment 230, enabling local inference and real-time decision-making. Results from local inference may be sent back to the cloud 256 to refine models and enhance accuracy over time.

By dividing AI processing between the customer-premises equipment 230 and the cloud 256, a balance between real-time responsiveness and the computational power needed for advanced AI tasks may be achieved. This approach maximizes efficiency, reduces latency, and ensures data security.

However, note that modern customer-premises equipment 230 do include neural processors, also known as neural processing units. The neural processing units are specialized processors designed to accelerate AI and machine learning tasks. They are optimized for handling neural network operations, making them highly efficient for tasks such as image and speech recognition, object detection, and other AI-related functions. In many cases, the neural processing units are integrated into a main system-on-chip (SoC) of the customer-premises equipment 230, together with a central processing unit (CPU) and a graphics processing unit (GPU). This integration allows the customer-premises equipment 230 to perform AI inference tasks locally, reducing latency and enhancing real-time processing capabilities.

Operation data of a personal computing device 200 of the household 220 accessing the Internet 224 via the customer-premises equipment 230 of the household 220 is obtained 122. Note that operation data of a single personal computing device 200 of the household 220 may be obtained 122, but, depending on the circumstances and the implementation, operation data of two or more personal computing devices 200, 206 of the household 220 may be obtained.

An accuracy of the device identification of the IoT device 210, 212, 214 is enhanced 134 based on the operation data of the personal computing device 200 of the household 220. The enhancing 134 may be based on the operation data of the single personal computing device 200 of the household 220, but, depending on the circumstances and the implementation, the enhancing 134 may be based on the operation data of two or more personal computing devices 200, 206 of the household 220.

In this way, using the three operations 104, 122 and 134, the accuracy of the device identification of the IoT device 210, 212, 214 of the household 220 is enhanced based on the operation data of the one or more personal computing devices 200, 206 of the household 220.

As used herein, the term "personal computing device" 200, 206 refers to physical user devices with communication capabilities used by users 204, 210 of the household 220. Various types of personal computing devices 200, 206 comprise, but are not limited to: a laptop computer 126, a desktop computer 128, a tablet computer 130, and a smartphone 132.

As used herein, the term "IoT device" 210, 212 refers to physical consumer and commercial IoT devices with communication capabilities of the household 220. Various types of IoT devices 210, 212 comprise, but are not limited to: a smart home device 106, a wearable device 108, a healthcare device 110, an entertainment device 112, an environmental monitoring device 114, a security device 116, and a networking device 118.

The smart home device 106 comprises a smart lighting device, a smart thermostat, a smart security system, a smart speaker and assistant device, a smart household appliance, a smart plug and outlet device, a smart sensor, a heating and cooling system, a home and building automation system, a vehicle monitor, and a network attached storage (NAS), for example. The wearable device 108 comprises a smartwatch and a fitness tracker, for example. The healthcare device 110 comprises a smart medical equipment and a health monitor, for example. The entertainment device 112 comprises a smart television, a streaming device, and a gaming console, for example. The environmental monitoring device 114 comprises an air quality monitor, a smart humidifier, and a smart thermostat, for example. The security device 116 comprises a smart lock, a video doorbell, and a security camera, for example. The networking device 118 comprises a smart router and a mesh Wi-Fi system, for example.

Note that the smartwatch is classified as a wearable device type of an IoT device 210, 212, 214. However, as user interface capabilities of the smartwatch evolve over time, the smartwatch may instead be classified as a type of a personal computing device 200, 206.

As used herein, the term "household" refers to a residential environment where the customer-premises equipment 230 is typically installed. In some use cases, the definition may extend to small office/home office (SOHO) settings, where the customer-premises equipment 230 is used to support business operations within a residential or small commercial space. The focus is on the end-user environment where the customer-premises equipment 230 is deployed to facilitate connectivity and communication services.

Next, additional examples with reference to FIG. 1A, FIG. 1B, and FIG. 2 are described. In these examples, additional operations provide further functionality, and operations may be specified in more detail to provide further refinement. In this way, a more accurate and reliable identification of the IoT devices 210, 212, 214 within the household 220 network 222 may be achieved. For the sake of clarity, only a single personal computing device and a single IoT device are referred to, but as was explained earlier, the processing may be based on the operation data of one or more personal computing devices 200, 206 of the household 220, and the subject of the device identification may be (in turns) one or more IoT devices 210, 212, 214 of the household 220.

Two players of the IoT marked, Govee^{®} and Ring^{®} may be used to illustrate various aspect of the examples. Govee^{®} specializes in smart lighting, home security systems, and environmental monitoring devices like thermometers and hygrometers. Ring^{®}, on the other hand, is well-known for its smart security solutions, including video doorbells, security cameras, and alarm systems. Both companies integrate their IoT devices 210, 212, 214 with IoT mobile applications 202, 208 (or apps) executing on the personal computing devices 200, 206, allowing users 204, 210 to control and monitor their household remotely, enhancing convenience and security.

In an example, an additional operation is performed: a wireless data transmission 282 between the IoT device 210 and the personal computing device 206 via the customer-premises equipment 230 is monitored 120. Enhancing 134 the accuracy of the device identification of the IoT device 210 based on the operation data of the personal computing device 206 of the household 220 further involves performing 136 an application detection based on the wireless data transmission 282. This application detection identifies an IoT mobile application 208 executing on the personal computing device 206 of the household 220. Enhancing 138 the accuracy of the device identification of the IoT device 210 is based on the identified IoT mobile application 208 executing on the personal computing device 206 of the household 220. For example, if the IoT mobile application 208 is from Ring^{®}, the device identification may check that the identified IoT device 212 is compatible with the Ring^{®} IoT mobile application.

In an example, enhancing 134 the accuracy of the device identification of the IoT device 212 based on the operation data of the personal computing device 200 of the household 220 further involves detecting 144 a use of an IoT mobile application 202 on the personal computing device 200 of the household 220 based on the operation data. In response to detecting 146 that the device identification failed to recognize the IoT device 212, testing 148 whether the IoT device 212 is a make and a model that is known to be compatible with the IoT mobile application 202.

As used herein, the terms "make" and "model" refer to various electronics products. The "make" refers to the manufacturer or brand of the product, while the "model" specifies the particular version or design produced by the manufacturer. For example, in the electronics industry, "Apple^{®}" may be the make, and "iPhone^{®} 16" the model.

For example, if the IoT mobile application 208 is from Ring^{®}, the device identification may perform additional checks for the unrecognized IoT device 212. Such additional check may try to match the unrecognized IoT device to all Ring-compatible makes and models of IoT devices. As it is known that Ring^{®} comprises a range of smart home devices, the device identification may be narrowed down to that class of IoT devices. And if granularity is increased, then the device identification may be concentrated on smart security solutions, including video doorbells, security cameras, and alarm systems. A database of compatibilities between various IoT mobile applications and various makes and models of IoT devices may be maintained (locally in the customer-premises equipment 230 and/or in the in the cloud 256) for the method to be operable.

In an example, enhancing 134 the accuracy of the device identification of the IoT device 212 based on the operation data of the personal computing device 200 of the household 220 further involves detecting 150 a use of an IoT mobile application 202 on the personal computing device 200 of the household 220 based on the operation data, and testing 152 whether the IoT device 212 is a make and a model that belongs to a class of IoT devices, of a plurality of classes of IoT devices, that is known to be compatible with the IoT mobile application 202. The plurality of classes of IoT devices comprises as earlier explained a smart home device class, a wearable device class, a healthcare device class, an entertainment device class, an environmental monitoring device class, a security device class, and a networking device class, for example. For example, if the IoT mobile application 202 is from Ring^{®}, the device identification may check whether the identified IoT device 212 is a make and a model that belongs to a security device class.

In an example, enhancing 134 the accuracy of the device identification of the IoT device 212 based on the operation data of the personal computing device 200 of the household 220 further involves detecting 154 that the device identification identified the IoT device 212 being compatible with an IoT mobile application, and in response to failing 156 to detect a use of the IoT mobile application on the personal computing device 200 of the household based on the operation data, testing 158 whether the IoT device 212 was misrecognized. For example, if the IoT device 212 was identified being compatible with the Ring^{®} IoT mobile application but the use of the Ring^{®} IoT mobile application was not detected, then a false positive identification error may have been made and that needs to be tested 158.

In an example, enhancing 134 the accuracy of the device identification of the IoT device 212 based on the operation data of the personal computing device 200 of the household 220 further involves detecting 160 a use of a first IoT mobile application 202 on the personal computing device 200 of the household 220 based on the operation data, and in response to detecting 162 that the device identification identified the IoT device 212 as being compatible with a second IoT mobile application, testing 164 whether the IoT device 212 was misrecognized. In this example, it may be supposed that the first IoT mobile application and the second IoT mobile application are incompatible with each other. For example, if the first IoT mobile application 202 is from Ring^{®}, but the identified IoT device 212 is compatible with the second IoT mobile application from Govee^{®}, then a false positive identification error may have been made and that needs to be tested 164.

In an example, enhancing 134 the accuracy of the device identification of the IoT device 206 based on the operation data of the personal computing device 200 of the household 220 further involves detecting 166 a use of an IoT mobile application 202 on the personal computing device 200 of the household 220 based on the operation data, and in response to detecting 168 that the device identification failed to recognize the IoT device 212, modifying 170 the device identification of the IoT device 212 to identify IoT devices that are compatible with the IoT mobile application 202. For example, if the IoT mobile application 202 is from Ring^{®}, the device identification may be modified 170 to better identify IoT devices that are Ring-compatible.

In an example, an additional operation is performed: prior to performing 104 the device identification of the IoT device 212 accessing the Internet 224 via the customer-premises equipment 230 of the household 230, monitoring 102 a wireless data transmission 284 between the IoT device 212 and the customer-premises equipment 230.

Note that not all IoT devices communicate directly with the customer-premises equipment 230. As shown in FIG. 2, a border router 218 may implemented a mesh network 216 for communication with a number of IoT devices 214. The IoT device 214 communicates 286 with the customer-premises equipment 230 via the border router 218, which acts as a bridge between the IoT device 214 and the wireless local area network 222.

The border router 218 may facilitate seamless communication by mapping IPv4 addresses to IPv6 addresses, enabling the IoT device 214 to interact with other devices and services outside the local mesh network 216. The communication process may begin with the IoT device 214 sending data packets to the border router 218. The border router 218 may be equipped with a radio coprocessor (RCP) to establish a Thread^{®} network, which is a low-power, IPv6-based wireless mesh network designed for the IoT devices 214.

Thread^{®} uses the IEEE 802.15.4 wireless protocol and provides reliable, secure, and scalable communication for IoT devices 215. The border router 218 receives the data packets from the IoT device 214 and translates the IPv6 addresses to IPv4 addresses, allowing the data to be routed to the appropriate destination on the Internet 224.

Matter^{®} is a unifying, IP-based connectivity protocol built on Thread^{®}. Matter^{®} simplifies smart home setup and ensures interoperability between devices from different manufacturers. Matter^{®} operates over IPv6 and may use existing wireless protocols such as Wi-Fi^{®} and Thread^{®}. Matter^{®} enhances the communication process by providing a standardized framework for the IoT devices 214 to interact seamlessly, ensuring reliable and secure connectivity.

The border router 218 also manages the connectivity and security of the IoT device 214 within the local network 222. The border router 218 may ensure that the IoT device 214 may communicate with other devices in the household 220, such as the personal computing devices 200, 206. Consequently, prior to performing 104 the device identification of the IoT device 214 accessing the Internet 224 via the border router 218 and the customer-premises equipment 230 of the household 230, a wireless data transmission 286 between the IoT device 212 and the customer-premises equipment 230 via the border router 218 is monitored 102.

In an example, obtaining 122 the operation data of the personal computing device 200, 206 of the household 220 accessing the Internet 224 via the customer-premises equipment 230 of the household 220 further involves monitoring 124 a wireless data transmission 280, 282 between the personal computing device 200, 206 and the customer-premises equipment 230.

As shown in FIG. 2, wireless data transmissions 280, 282, 284, 286 from the plurality of personal computing devices 200, 206 of the household 220, and from the plurality of the IoT devices 210, 212, 214 of the household 220 to the customer-premises equipment 230 are monitored 102, 120, 124. This may be implemented so that the wireless data transmissions 280, 282, 284, 286 are monitored by the customer-premises equipment 230 in its wireless local area network 222.

As used herein, the term "customer-premises equipment" 230 refers to a physical device providing the wireless local area network 222 for the IoT devices 210, 212, 214 and the personal computing devices 200, 206, and an access for each IoT device 210, 212, 214 and personal computing device 200, 206 to the wide area network 224 such as the Internet.

The wireless data transmission 280, 282, 284 is transferred over a wireless connection between the personal computing device 200, 206 or the IoT device 210 and the customer-premises equipment 230. The connection is first established between the personal computing device 200, 206 or the IoT device 210 and the customer-premises equipment 230. Next, the wireless data transmission 280, 284 may extend from the personal computing device 200, 206 or the IoT device 212 via the WLAN 222 and WAN 224 to a target website 240, 242 using a Hypertext Transfer Protocol/Hypertext Transfer Protocol Secure (HTTP/HTTPS) connection. The establishment of the HTTP/HTTPS connection may also require a wireless data transmission with a domain name system (DNS) server (not illustrated in FIG. 2).

In the wireless data transmission 280, 282, 284 data packets may be transferred from and to the personal computing device 200, 206, or the IoT device 212. In an example, the customer-premises equipment 230 is configured to generate a wireless non-cellular internet access network 222. The customer-premises equipment 230 may be configured to operate at a home or an office of the household 220.

Next, let us study how a cybersecurity operator is capable of monitoring the wireless data transmission 280, 282, 284

First, the wireless connection between the personal computing device 200, 206 or the IoT device 212 and the customer-premises equipment 230 is monitored 102, 124. An IoT mobile application 202, 208 running in the personal computing device 200, 206 may seek to establish a connection with an IoT device 210 or to a target website 240, for example. As shown in FIG. 2, the connection between the personal computing device 200 and the customer-premises equipment 230 is routed through an access of the WAN 224 to the target website 240 to implement the wireless data transmission 280. As also shown in FIG. 2, the connection between the personal computing device 206 and the IoT device 210 is routed through the customer-premises equipment 230 to implement the wireless data transmission 282. The IoT device 212 may seek to establish a connection with a target website 2442, for example. As shown in FIG. 2, the connection between the IoT device 212 and the customer-premises equipment 230 is routed through an access of the WAN 224 to the target website 242 to implement the wireless data transmission 284.

The personal computing device 200 may use the website 240 for various operations. The user 204 of personal computing device 200 may use the IoT mobile application 202 to connect to a service running on the website 240, or to download a software update from the website 240, for example. The IoT device 212 may upload sensor data gathered by one or more sensors onboard to the website 242, or to download a software update from the website 242, for example. Numerous other well-known operations related to the websites 240, 242 may also be performed by the personal computing device 200, and the IoT device 212.

The personal computing device 200 may be configured to execute the IoT mobile application, and as a result, the wireless data transmission 280 from the personal computing device 200 to the accessed website 240 via the LAN 222 and the WAN 224 is performed. The IoT mobile application 202 may automatically cause the wireless data transmission 280, or, alternatively, the wireless data transmission 280 may be generated as a result of an action by the user 204 through user interface controls of the IoT mobile application 202.

The IoT device 212 may be configured to execute a local application (not illustrated in FIG. 2), and as a result, the wireless data transmission 284 from the IoT device 212 to the accessed website 242 via the LAN 222 and the WAN 224 is performed. The local application may automatically cause the wireless data transmission 284, or, alternatively, the wireless data transmission 284 may be generated as a result of an action by the user 204 through user interface controls of the IoT mobile application 202: the command is then transferred from the IoT mobile application to the local application.

The personal computing device 200 may create the connection using a packet protocol from the website access application of the personal computing device 200 to the target website 240. The target website 240 may host a server application enabling access by the website access application. The packet protocols include, but are not limited to, Transmission Control Protocol/Internet Protocol (TCP/IP), User Datagram Protocol/Internet Protocol (UDP/IP), and OUIC, which establishes a multiplexed transport on top of the UDP. Various Hypertext Transfer Protocol/Hypertext Transfer Protocol Secure (HTTP/HTTPS) requests may then be transferred in the wireless data transmission 280 (using TCP streams or UDP datagrams, for example). In the Internet Protocol suite, the wireless data transmission 280 is operated in a link layer, an internet layer, and a transport layer, and the requests transmitted in the wireless data transmission 280 are operated in an application layer.

As used herein, the term "monitoring" refers to user-approved lawful interception or monitoring of the wireless data transmission 280, 282, 284, 286 with a purpose and goal of increasing cybersecurity related to personal computing device 200, 206 and IoT device 210, 212, 214 and its operating environment in the household 220. As the radio signal of the wireless data transmission 280, 282, 284, 286 is monitored, the wireless data transmission 280, 282, 284, 286 is accessed and collected between the transmitting device and the receiving device. The wireless data transmission 280, 282, 284, 286 may be monitored even if the digital data transmission units (such as messages) of the wireless data transmission 280, 282, 284, 286 are addressed to the receiving device (such as the customer-premises equipment 230, or the target website 240, 242). The monitoring may be implemented so that the wireless data transmission 280, 282, 284, 286 is passively monitored, i.e., the wireless data transmission 280, 282, 284, 286 is not affected by the monitoring. Alternatively, if needed, the monitoring may include a seizing of the wireless data transmission 280, 282, 284, 286, i.e., the wireless data transmission 280, 282, 284, 286 is actively influenced so that a connection and/or requests and/or responses are blocked until it may be decided whether a cybersecurity action (such as blocking of the wireless data transmission 280, 282, 284, 286) is required.

As used herein, the term "wireless data transmission" refers to the transmission and/or reception of (digital) data between the personal computing device 200, 206 or the IoT device 210, 212, 214 and the customer-premises equipment 230. The wireless data transmission 280, 282, 284, 286 is transferred using digital data transmission units over a communication medium such as one or more communication channels between the personal computing device 200, 206 or the IoT device 210, 212 and another network node such as the customer-premises equipment 230 or the target website 240, 242, 244. Besides over radio interface in the WLAN 222, the data may be conveyed over another transmission medium (implemented by copper wires, or optical fibers, for example) in the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the personal computing device 200, 206, the IoT device 210, 212, 214 and other network nodes to implement the successful and reliable wireless data transmission 280, 282, 284, 286. The communication protocols may implement a protocol stack with different conceptual protocol layers.

The wireless data transmission 280, 282, 284, 286 may be monitored by a cybersecurity client 252 operating in the customer-premises equipment 230. The wireless data transmission 280, 282, 284, 286 may be accessed and collected by the cybersecurity client 252. The cybersecurity client 252 may also access a data structure related to the wireless data transmission 280 established and maintained at the customer-premises equipment 230 after a successful handshake sequence between the personal computing device 200, 206 or the IoT device 210, 212, 214 and the customer-premises equipment 230. The monitored wireless data transmission 280, 282, 284, 286 may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the personal computing device 200 or the IoT device 210, 212, 214, and their communication) to enable the device identification.

The WAN such as the Internet 224 uses the Internet Protocol suite including TCP/IP and UDP/IP to globally connect computer networks so that communication is enabled between the personal computing device 200, 206 or the IoT device 210, 212, 214 and various Internet services provided typically by the websites 240, 242, 244. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML).

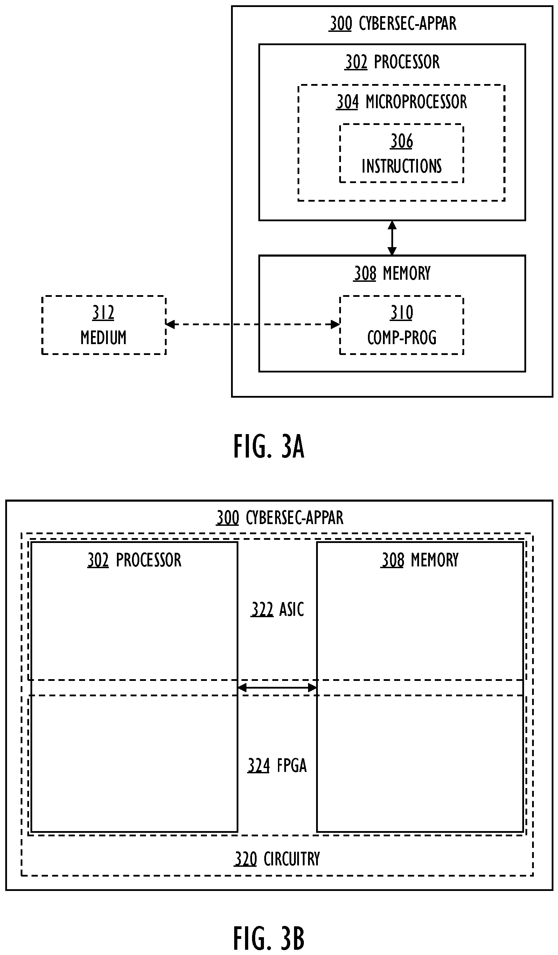

FIG. 3A and FIG. 3B are block diagrams illustrating examples of a cybersecurity apparatus 300. The method described with reference to FIG. 1A and FIG. 1B may be implemented by the cybersecurity apparatus 300. The apparatus 300 may execute the operations defined in the method. The apparatus 300 may implement an algorithm, which includes the operations of the method, but may optionally include other operations related to the cybersecurity in general. Note that the method described with reference to FIG. 1A and FIG. 1B may be implemented as a part of the cybersecurity client 252 running in the customer-premises equipment 230 as shown in FIG. 2. As shown in FIG. 2, the cybersecurity apparatus 300 may comprise various distributed actors 252, 254 communicatively coupled 274 with each other.

The operations of the method may be implemented in connection with various other aspects of cybersecurity operations, such as a device identification, device intelligence, household intelligence, and application detection, for example.

Various artificial intelligence (AI) technologies executed in the customer-premises equipment 230 and/or in the computing resource 256 may be used for the implementation. Machine learning (ML) algorithms in general analyze data related to the personal computing device 200, 206 and IoT device 210, 212, 214 and their wireless data transmissions 280, 282, 284, 286 via the customer-premises equipment 230 to identify patterns. The machine learning algorithms are able to adapt and enhance over time, thereby enabling recognition of new and evolving IoT devices 210, 212, 214. Clustering algorithms are unsupervised learning algorithms that group similar data points together, helping in the device identification. Rule-based algorithms rely on predefined rules to detect device behavior related to device identification. Deep learning is a subset of machine learning that uses neural networks with many layers to analyze complex behavior patterns in large datasets.

The cybersecurity apparatus 300 comprises one or more memories 308, and one or more processors 302 coupled to the one or more memories 308 configured to execute the operations described in FIG. 1A and FIG. 1B.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 308 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as Go, Java, C, or C++, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASIC) 322, field-programmable gate arrays (FPGA) 324, application-specific standard products (ASSP), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

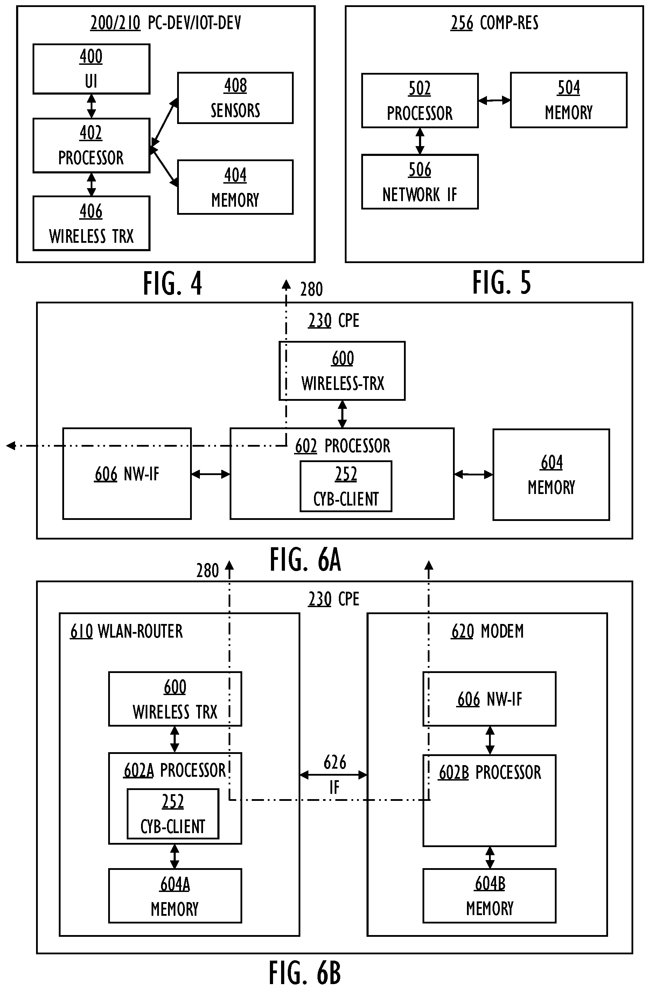

FIG. 4 is a block diagram illustrating an example of the personal computing device 200, 206 and the IoT device 210, 212, 214. The personal computing device 200, 206 may be a laptop computer, a desktop computer a tablet computer, or a smartphone, or another kind of ubiquitous personal mobile or stationary communication device of the user 204, 210 operating with or without a subscriber identification module (SIM) or an embedded SIM (eSIM). The IoT device 210, 212 may be a consumer and commercial device, such as a smart home device, a wearable device, a healthcare device, an entertainment device, an environmental monitoring device, a security device, and a networking device, or another kind of IoT device such as an industrial or infrastructure IoT device usable in the household 220.

The personal computing device 200, 206 or the IoT device 210, 212, 214 comprises one or more memories 404, and one or more processors 402 coupled to the one or more memories 404 configured to carry out various functionalities. In addition, the personal computing device 200, 206 or the IoT device 210, 212, 214 comprises a user interface 400 (such as a touch screen or one or more LEDs), and one or more wireless transceivers 406 (such as a WLAN transceiver, a cellular radio network transceiver, and a short-range radio transceiver), and also one or more sensors 408.

FIG. 5 is a block diagram illustrating an example of a computing resource 256 such as a server apparatus. The server apparatus 256 may be a networked computer server, which interoperates with the customer-premises equipment 230 according to a client-server architecture, a cloud computing architecture, a peer-to-peer system, or another applicable distributed computing architecture. As shown in FIG. 5, the server apparatus 256 comprises one or more memories 504, and one or more processors 502 coupled to the one or more memories 504 configured to carry out the functionality of the cybersecurity server 254. In addition, the server apparatus 256 comprises a network interface (such as an Ethernet network interface card) 506 configured to couple the server apparatus 256 to the Internet 224.

FIG. 6A and FIG. 6B are block diagrams illustrating examples of the customer-premises equipment 230.

The customer-premises equipment 230 is located in the household 220 (usually at home but in some cases maybe at office) of the users 204, 210. The customer-premises equipment 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the customer-premises equipment 230 acts as a network bridge, and/or a router.

The customer-premises equipment 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the users 204, 210 and their devices 200, 206, 210, 212, 214 to access communication services of the NSP, and the Internet 224. Note that the customer-premises equipment 230 may also be implemented with wireless technology, such as a 4G or 5G customer-premises equipment 230 configured to exchange a 5G cellular radio network signal with the WAN 224 of a base station operated by the broadband service provider, and generate a Wi-Fi^{®} (or WLAN) or wired signal to implement the LAN 222 to provide access for the personal computing device 200, 206 and the IoT device 210, 212, 214. Furthermore, the 4G/5G customer-premises equipment 230 performs the conversion between the 4G/5G cellular radio network signal and the Wi-Fi^{®} or wired signal.

In FIG. 6A, the customer-premises equipment 230 is an integrated apparatus comprising one or more memories 604, and one or more processors 602 coupled to the one or more memories 604 configured to carry out a part of the method/algorithm in some examples. Additionally, the customer-premises equipment 230 comprises a wireless radio transceiver 600 configured to create the WLAN 222 for enabling access by the personal computing device 200, 206 and the IoT device 210, 212, 214. The customer-premises equipment 230 also comprises a network interface 606 to act as a modem configured to connect to the telecommunication circuit of the carrier at the demarcation point, i.e., to the WAN 224. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The customer-premises equipment 230 may be running the cybersecurity client 252.

In FIG. 6B, the customer-premises equipment 230 is a two-part apparatus. A WLAN router part 610 comprises the one or more memories 604A, the one or more processors 602A coupled to the one or more memories 604A configured to carry out the method/algorithm, and the wireless transceiver 600 to create the LAN 222 for enabling access by the personal computing device 200, 206 and the IoT device 210, 212, 214. A modem part 620 comprises the one or more processors 602B coupled to one or more memories 604B configured to carry out modem operations, and the network interface 606 to act as the modem configured to connect to the WAN 224. The WLAN router part 610 may be purchased by the user 204, 210 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 252, another component running on the customer-premises equipment 230 may be configured to run a part of the algorithm implementing the method in some examples.

The customer-premises equipment 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the customer-premises equipment 230 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may in a stand-alone fashion carry out the method/algorithm, or a part of the method/algorithm functionality may be augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the customer-premises equipment 230 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
performing (104) a device identification of an Internet of Things, IoT, device accessing the Internet via a customer-premises equipment of a household;
obtaining (122) operation data of a personal computing device of the household accessing the Internet via the customer-premises equipment of the household; and
enhancing (134) an accuracy of the device identification of the IoT device based on the operation data of the personal computing device of the household.

2. The method of claim 1, wherein the IoT device comprises at least one of a smart home device (106), a wearable device (108), a healthcare device (110), an entertainment device (112), an environmental monitoring device (114), a security device (116), and a networking device (118).

3. The method of claim 2, wherein the smart home device (106) comprises at least one of a smart lighting device, a smart thermostat, a smart security system, a smart speaker and assistant device, a smart household appliance, a smart plug and outlet device, a smart sensor, a heating and cooling system, a home and building automation system, a vehicle monitor, and a network attached storage, wherein the wearable device (108) comprises at least one of a smartwatch and a fitness tracker, wherein the healthcare device (110) comprises at least one of a smart medical equipment and a health monitor, wherein the entertainment device (112) comprises at least one of a smart television, a streaming device, and a gaming console, wherein the environmental monitoring device (114) comprises at least one of an air quality monitor, a smart humidifier, and a smart thermostat, wherein the security device (116) comprises at least one of a smart lock, a video doorbell, and a security camera, and wherein the networking device (118) comprises at least one of a smart router and a mesh Wi-Fi system.

4. The method of any preceding claim, wherein the personal computing device comprises at least one of a laptop computer (126), a desktop computer (128), a tablet computer (130), and a smartphone (132).

5. The method of any preceding claim, further comprising:
monitoring (120) a wireless data transmission between the IoT device and the personal computing device via the customer-premises equipment; and
wherein enhancing (134) the accuracy of the device identification of the IoT device based on the operation data of the personal computing device of the household further comprises:
performing (136) an application detection based on the wireless data transmission to identify an IoT mobile application executing on the personal computing device of the household; and
enhancing (138) the accuracy of the device identification of the IoT device based on the identified IoT mobile application executing on the personal computing device of the household.

6. The method of any preceding claim, wherein enhancing (134) the accuracy of the device identification of the IoT device based on the operation data of the personal computing device of the household further comprises:
detecting (144) a use of an IoT mobile application on the personal computing device of the household based on the operation data; and
in response to detecting (146) that the device identification failed to recognize the IoT device, testing (148) whether the IoT device is a make and a model that is known to be compatible with the IoT mobile application.

7. The method of any preceding claim, wherein enhancing (134) the accuracy of the device identification of the IoT device based on the operation data of the personal computing device of the household further comprises:
detecting (150) a use of an IoT mobile application on the personal computing device of the household based on the operation data; and
testing (152) whether the IoT device is a make and a model that belongs to a class of IoT devices, of a plurality of classes of IoT devices, that is known to be compatible with the IoT mobile application, wherein the plurality of classes of IoT devices comprises at least one of a smart home device class, a wearable device class, a healthcare device class, an entertainment device class, an environmental monitoring device class, a security device class, and a networking device class.

8. The method of any preceding claim, wherein enhancing (134) the accuracy of the device identification of the IoT device based on the operation data of the personal computing device of the household further comprises:
detecting (154) that the device identification identified the IoT device being compatible with an IoT mobile application; and
in response to failing (156) to detect a use of the IoT mobile application on the personal computing device of the household based on the operation data, testing (158) whether the IoT device was misrecognized.

9. The method of any preceding claim, wherein enhancing (134) the accuracy of the device identification of the IoT device based on the operation data of the personal computing device of the household further comprises:
detecting (160) a use of a first IoT mobile application on the personal computing device of the household based on the operation data; and
in response to detecting (162) that the device identification identified the IoT device as being compatible with a second IoT mobile application, wherein the first IoT mobile application and the second IoT mobile application are incompatible with each other, testing (164) whether the IoT device was misrecognized.

10. The method of any preceding claim, wherein enhancing (134) the accuracy of the device identification of the IoT device based on the operation data of the personal computing device of the household further comprises:
detecting (166) a use of an IoT mobile application on the personal computing device of the household based on the operation data; and
in response to detecting (168) that the device identification failed to recognize the IoT device, modifying (170) the device identification of the loT device to identify IoT devices that are compatible with the IoT mobile application.

11. The method of any preceding claim, further comprising:
prior to performing (104) the device identification of the IoT device accessing the Internet via the customer-premises equipment of the household, monitoring (102) a wireless data transmission between the IoT device and the customer-premises equipment.

12. The method of any preceding claim, wherein obtaining (122) the operation data of the personal computing device of the household accessing the Internet via the customer-premises equipment of the household further comprises:
monitoring (124) a wireless data transmission between the personal computing device and the customer-premises equipment.

13. An apparatus comprising means for carrying out the method of any preceding claim 1-12.

14. A computer program product comprising instructions which, when executed by an apparatus, cause the apparatus to carry out the method of any preceding claim 1-12.

15. A computer-readable medium comprising a computer program with instructions which, when executed by an apparatus, cause the apparatus to carry out the method of any preceding claim 1-12.
